(19) Europäisches Patentamt
European Patent Office
Office européen des brevets

(11) EP 0 702 058 B1

(12) **EUROPÄISCHE PATENTSCHRIFT**

(45) Veröffentlichungstag und Bekanntmachung des Hinweises auf die Patenterteilung:
**06.10.1999 Patentblatt 1999/40**

(51) Int Cl.[6]: **C08L 71/12**, C08L 81/06, C08L 77/06

(21) Anmeldenummer: **95112342.1**

(22) Anmeldetag: **05.08.1995**

(54) **Formmassen aus Polyarylenethern und Copolyamiden**

Moulding compositions of polyaryleneethers and copolyamides

Mélange à mouler composé d'éthers polyaryleniques et de copolyamides

(84) Benannte Vertragsstaaten:
**BE CH DE FR GB IT LI NL**

(30) Priorität: **17.08.1994 DE 4429107**

(43) Veröffentlichungstag der Anmeldung:
**20.03.1996 Patentblatt 1996/12**

(73) Patentinhaber: **BASF AKTIENGESELLSCHAFT**
**67056 Ludwigshafen (DE)**

(72) Erfinder:
- **Weber, Martin, Dr.**
  **D-67433 Neustadt (DE)**
- **Fisch, Herbert, Dr.**
  **D-67157 Wachenheim (DE)**
- **Pipper, Gunter**
  **D-67098 Bad Dürkheim (DE)**
- **Gottschalk, Axel, Dr.**
  **D-67435 Neustadt (DE)**

(56) Entgegenhaltungen:
**EP-A- 0 185 237** **EP-A- 0 477 757**
**EP-A- 0 510 383** **EP-A- 0 522 307**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 702 058 B1

## Beschreibung

Die vorliegende Erfindung betrifft Formmassen, die

A) 1 bis 99 Gew.-% Polyarylenether mit wiederkehrenden Einheiten I

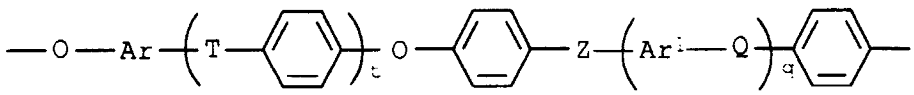

(I),

in denen t und q jeweils eine ganze Zahl 0, 1, 2 oder 3 bedeuten können,

T, Q und Z jeweils eine chemische Bindung oder eine Gruppe -O-, -S-, $-SO_2-$, S=O, C=O, -N=N-, $R^aC=CR^b-$ oder $-CR^cR^d-$ sein können, mit der Maßgabe, daß mindestens eine der Gruppen T, Q oder Z $-SO_2-$ oder C=O bedeutet,

$R^a$ und $R^b$ jeweils ein Wasserstoffatom oder eine $C_1$- bis $C_{10}$-Alkylgruppe bedeuten,

$R^c$ und $R^d$ jeweils ein Wasserstoffatom, eine $C_1$- bis $C_{10}$-Alkyl-, $C_5$- bis $C_{10}$-Cycloalkyl, $C_1$- bis $C_{10}$-Alkoxy- oder $C_6$- bis $C_{18}$-Arylgruppe, wobei die vorgenannten Gruppen jeweils mit Fluor- und/oder Chloratomen substituiert sein können, bedeuten,

Ar und $Ar^1$ für $C_6$- bis $C_{18}$-Arylgruppen stehen, wobei diese Substituenten haben können, ausgewählt aus $C_1$- bis $C_{10}$-Alkyl, $C_6$- bis $C_{18}$-Aryl, $C_1$ bis $C_{10}$-Alkoxy und Halogen,

B) 1 bis 99 Gew.-% Copolyamide, im wesentlichen aufgebaut aus

| | |
|---|---|
| $b_1$) | 30 bis 44 mol-% Einheiten, welche sich von Terephthalsäure ableiten |
| $b_2$) | 6 bis 20 mol-% Einheiten, welche sich von Isophthalsäure ableiten |
| $b_3$) | 43 bis 49,5 mol-% Einheiten, welche sich von Hexamethylendiamin ableiten |
| $b_4$) | 0,5 bis 7 mol-% Einheiten, welche sich von aliphatischen cyclischen Diaminen mit 6 bis 30 C-Atomen ableiten |
| $b_5$) | 0 bis 4 mol-% weiteren, von $b_1$) bis $b_4$) verschiedenen polyamidbildenden Monomeren, |

wobei die Molprozente der Komponenten $b_1$) bis $b_5$) zusammen 100 % ergeben und

| | |
|---|---|
| C) | 0 bis 60 Gew.-% faser- oder teilchenförmige Füllstoffe oder Verstärkungsmittel |
| D) | 0 bis 40 Gew.-% schlagzähmodifizierende Kautschuke |
| E) | 0 bis 40 Gew.-% Zusatzstoffe, Verarbeitungshilfsmittel oder deren Mischungen |

wobei die Gewichtsprozente der Komponenten A) bis E) zusammen 100 % ergeben, enthalten. Darüberhinaus betrifft die vorliegende Erfindung deren Verwendung.

In der DE-A-21 22 735 wird allgemein erwähnt, daß sich Polysulfone mit Polyamiden, die aromatische und/oder aliphatische Gruppen enthalten, mischen lassen. Blends aus Polyarylenethern und ausgewählten teilaromatischen Polyamiden sind beispielsweise in der EP-A2-477 757 oder der DE-A1-41 21 705 zu entnehmen. Letztere besitzen zwar gegenüber Blends aus Polyarylenethern und aliphatischen Polyamiden höhere Wärmeformbeständigkeiten und höhere Steifigkeiten, für viele Anwendungen jedoch sind deren Verarbeitungsstabilitäten nicht hinreichend.

Aufgabe der vorliegenden Erfindung war es deshalb Blends auf der Basis von Polyarylenethern und teilaromatischen Polyamiden zur Verfügung zu stellen, die sich neben hohen Steifigkeiten und Wärmeformbeständigkeiten durch gute Verarbeitungsstabilitäten auszeichnen.

Diese Aufgabe wird von den eingangs definierten Formmassen erfüllt.

Komponente A

Der Anteil der Komponente A an den erfindungsgemäßen Formmassen beträgt 1 bis 99 Gew.-%. Meist enthalten die erfindungsgemäßen Formmassen 5 oder mehr Gew.-% dieser Komponente. Bevorzugt beträgt der Anteil der Komponente A an den erfindungsgemäßen Formmassen 10 bis 90 Gew.-%.

Die Polyarylenether A enthalten die wiederkehrenden Einheiten I

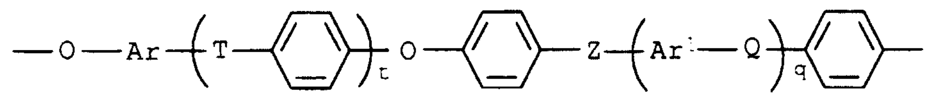 (I)

Dabei können t und q jeweils den Wert 0, 1, 2 oder 3 annehmen. T, Q und Z können unabhängig voneinander gleich oder verschieden sein. Sie können eine chemische Bindung oder eine Gruppe ausgewählt aus -O-, $-SO_2-$, -S-, C=O, -N=N- und S=O sein. Daneben können T, Q und Z auch für eine Gruppe der allgemeinen Formel $-R^aC=CR^b$-oder $-CR^cR^d-$ stehen, wobei $R^a$ und $R^b$ jeweils Wasserstoff oder $C_1$ bis $C_{10}$-Alkylgruppen, $R^c$ und $R^d$ jeweils Wasserstoff, $C_1$- bis $C_{10}$-Alkyl- wie Methyl, Ethyl, n-Propyl, i-Propyl, t-Butyl, n-Hexyl, $C_1$- bis $C_{10}$-Alkoxy wie Methoxy, Ethoxy, n-Propoxy, i-Propoxy, n-Butoxy oder $C_6$- bis $C_{18}$-Arylgruppen wie Phenyl oder Naphthyl bedeuten. Die Reste $R^c$ und $R^d$ können auch zusammen mit dem Kohlenstoffatom an den sie gebunden sind einen cycloaliphatischen Ring, bevorzugt einen $C_5$- bis $C_7$-Cycloalkylring bilden. Dieser Cyclo-alkylring kann seinerseits einen oder mehrere Substituenten tragen. Zu den bevorzugten Substituenten zählen $C_1$- bis $C_{10}$-Alkyl-reste, wie Methyl, Ethyl, Propyl oder i-Propyl, insbesondere Methyl. Bevorzugt werden Polyarylenether A, in denen T, Q und Z -O-, $-SO_2-$, C=O, eine chemische Bindung oder eine Gruppe der Formel $-CR^cR^d$ bedeuten. Zu den bevorzugten Resten $R^c$ und $R^d$ zählen Wasserstoff und Methyl. Von den Gruppen T, Q und Z bedeutet mindestens eine $-SO_2-$ oder C=O. Ar und $Ar^1$ stehen für $C_6$- bis $C_{18}$-Arylgruppen, wie 1,5-Naphthyl, 1,6-Naphthyl, 2,7-Naphthyl, 1,5-Anthryl, 9,10-Anthryl, 2,6-Anthryl, 2,7-Anthryl oder Biphenyl, insbesondere Phenyl. Vorzugsweise sind diese Arylgruppen nicht substituiert. Sie können jedoch Substituenten ausgewählt aus $C_1$- bis $C_{10}$-Alkyl- wie Methyl, Ethyl, n-Propyl, i-Propyl, t-Butyl, n-Hexyl, $C_6$- bis $C_{18}$-Aryl wie Phenyl oder Naphthyl, $C_1$-bis $C_{10}$-Alkoxyreste wie Methoxy, Ethoxy, n-Propoxy, i-Propoxy, n-Butoxy und Halogenatome haben. Zu den davon bevorzugten Substituenten gehören Methyl, Phenyl, Methoxy und Chlor.

Einige geeignete wiederkehrende Einheiten sind im folgenden aufgeführt:

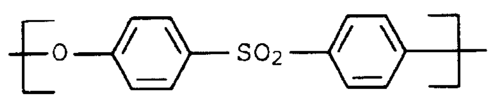 ($I_1$)

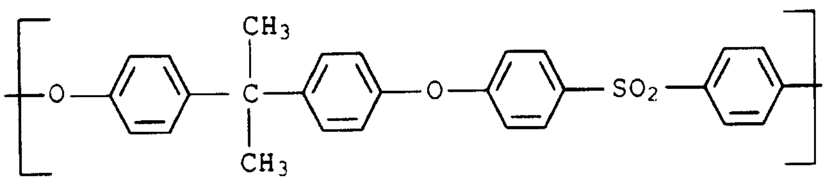 ($I_2$)

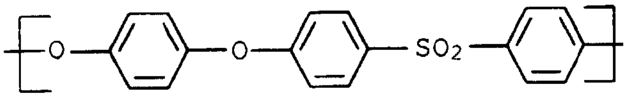 ($I_3$)

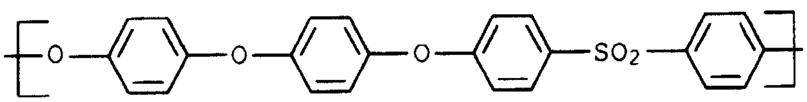 ($I_4$)

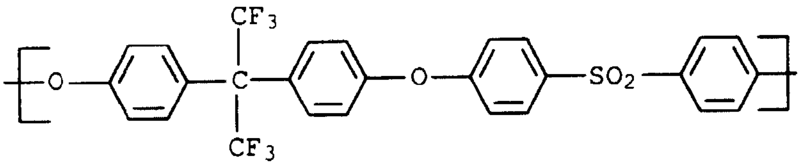

($I_5$)

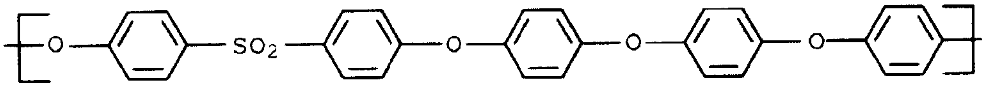

($I_6$)

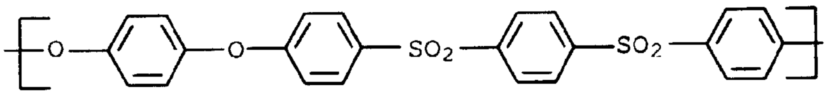

($I_7$)

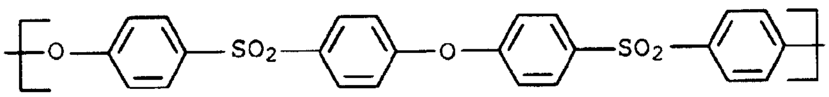

($I_8$)

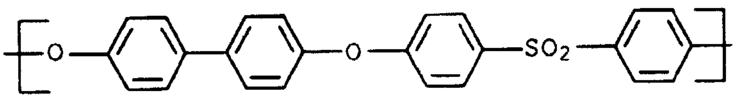

($I_9$)

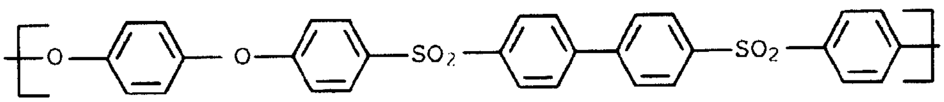

($I_{10}$)

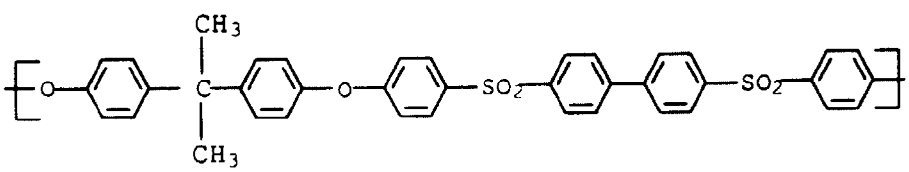

($I_{11}$)

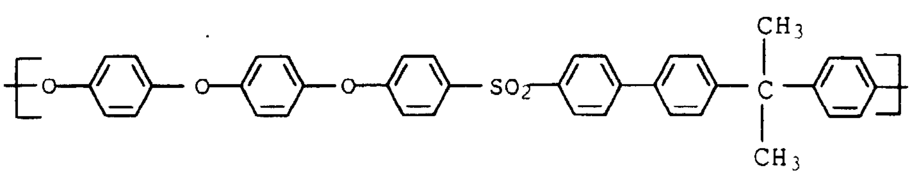

($I_{12}$)

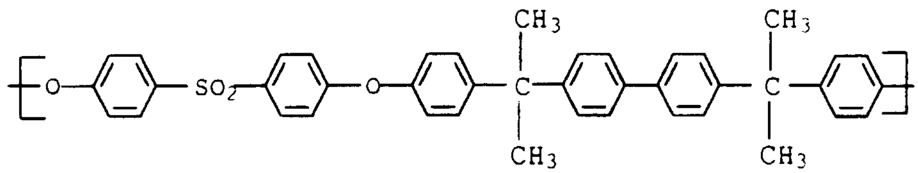

($I_{13}$)

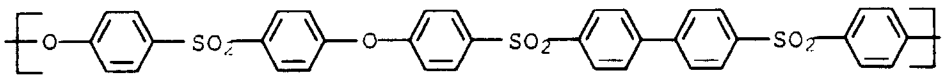

($I_{14}$)

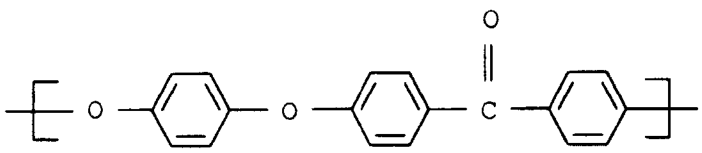

($I_{15}$)

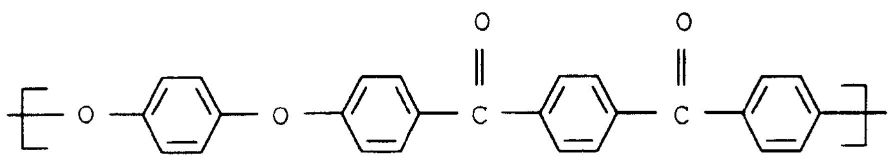

($I_{16}$)

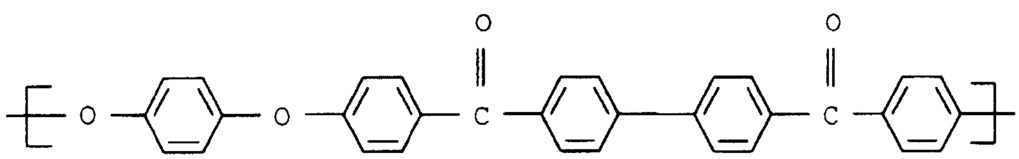

($I_{17}$)

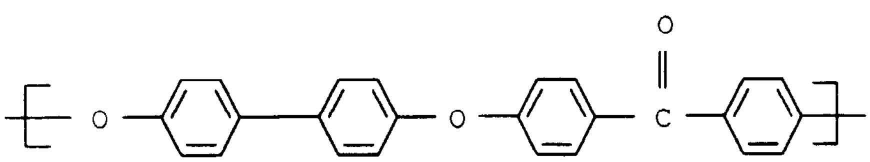

($I_{18}$)

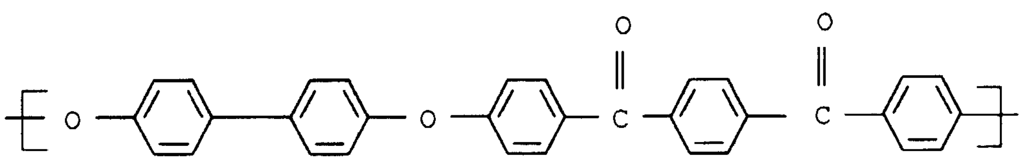

($I_{19}$)

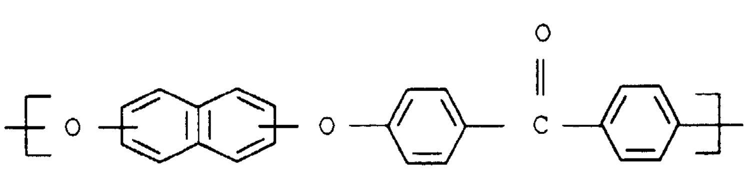

($I_{20}$)

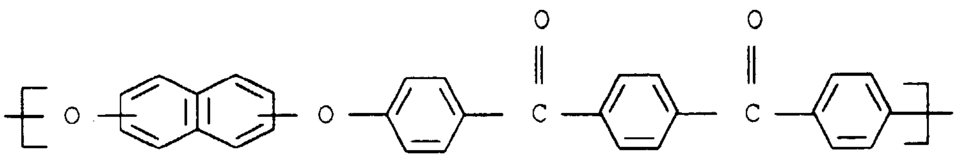

($I_{21}$)

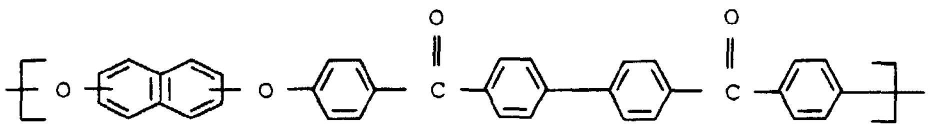

($I_{22}$)

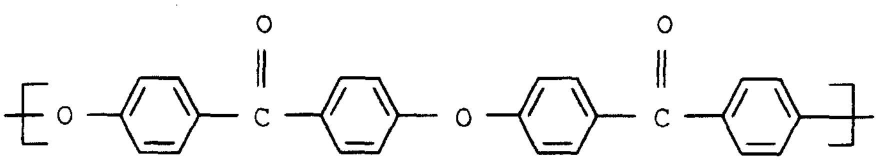

($I_{23}$)

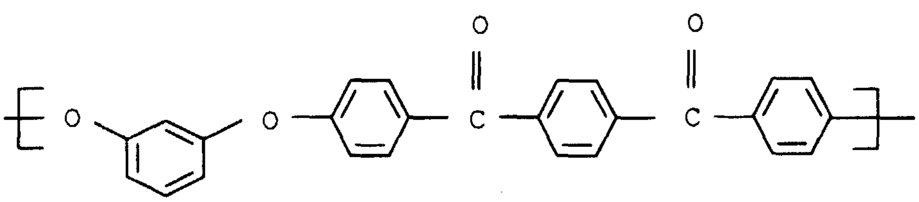

($I_{24}$)

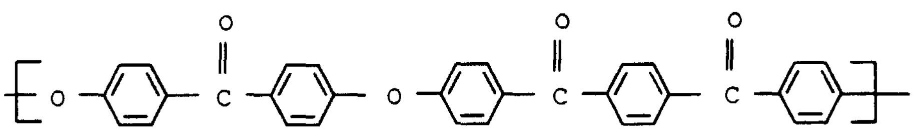

($I_{25}$)

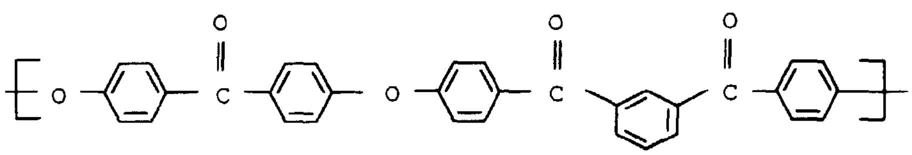

($I_{26}$)

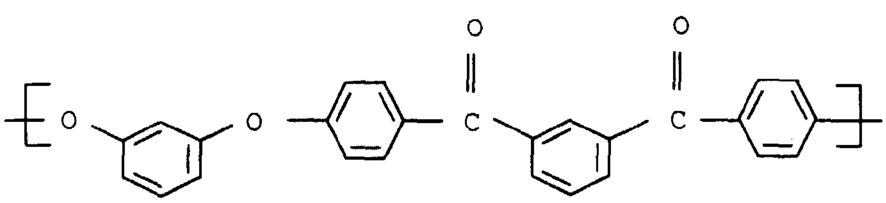

($I_{27}$)

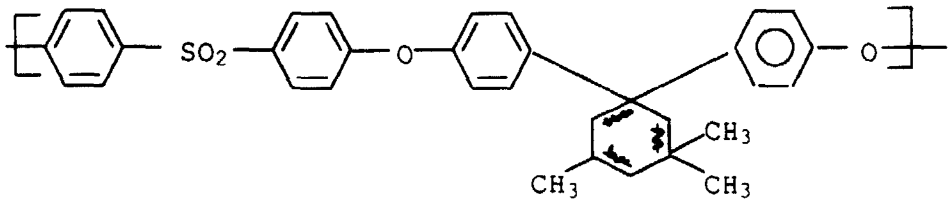 ($I_{28}$)

Ganz besonders werden Formmassen bevorzugt, die als Komponente A Polyarylenether mit wiederkehrenden Einheiten ($I_1$), ($I_2$), ($I_{25}$) oder ($I_{26}$) enthalten. Dazu zählen beispielsweise Formmassen, die als Komponente A Polyarylenether mit 0 bis 100 Mol-% wiederkehrende Einheiten ($I_1$) und 0 bis 100 Mol-% wiederkehrende Einheiten ($I_2$) enthalten.

Die Polyarylenether A können auch Co- oder Blockcopolymere sein, in denen Polyarylenethersegmente und Segmente von anderen thermoplastischen Polymeren wie Polyamiden, Polyestern, aromatischen Polycarbonaten, Polyestercarbonaten, Polysiloxanen, Polyimiden oder Polyetherimiden vorliegen. Die Molekulargewichte $M_n$ (Zahlenmittel) der Blöcke- bzw. der Pfropfarme in den Copolymeren liegen in der Regel im Bereich von 1 000 bis 30 000 g/mol. Die Blöcke unterschiedlicher Struktur können alternierend oder statistisch angeordnet sein. Der Gewichtsanteil der Polyarylenether in den Co- oder Blockcopolymeren beträgt im allgemeinen mindestens 10 Gew.-%. Der Gewichtsanteil der Polyarylenether kann bis zu 97 Gew.-% betragen. Bevorzugt werden Co- oder Blockcopolymere mit einem Gewichtsanteil an Polyarylenether mit bis zu 90 Gew.-%. Besonders bevorzugt werden Co- oder Blockcopolymere mit 20 bis 80 Gew.-% Polyarylenether.

Im allgemeinen weisen die Polyarylenether mittlere Molekulargewichte $\overline{M}_n$ (Zahlenmittel) im Bereich von 10 000 bis 60 000 g/mol und relative Viskositäten von 1,25 bis 1,95 auf. Die relativen Viskositäten werden je nach Löslichkeit der Polyarylenether entweder in 1 gew.-%iger N-Methylpyrrolidon-Lösung, in Mischungen aus Phenol und Dichlorbenzol oder als 0,5 gew.-%ige Lösung in 96 %iger Schwefelsäure bei jeweils 20°C bzw. 25°C gemessen.

Polyarylenether mit wiederkehrenden Einheiten I sind an sich bekannt und können nach bekannten Methoden hergestellt werden.

Sie entstehen z.B. durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden. Der DE-A-38 43 438 ist beispielsweise eine ausführliche Zusammenstellung geeigneter Monomerer zu entnehmen. Geeignete Verfahren werden unter anderem in der US-A-3 441 538, 4 108 837, der DE-A1-27 38 962 und der EP-A1-361 beschrieben. Polyarylenether, die Carbonylfunktionen enthalten, sind auch durch elektrophile (Friedel-Crafts)-Polykondensation zugänglich, wie unter anderem in der WO 84/03892 beschrieben. Bei der elektrophilen Polykondensation werden zur Bildung der Carbonylbrücken entweder Dicarbonsäurechloride oder Phosgen mit Aromaten, welche zwei -.durch elektrophile Substituenten austauschbare - Wasserstoffatome enthalten, umgesetzt, oder es wird ein aromatisches Carbonsäurechlorid, das sowohl eine Säurechloridgruppe als auch ein substituierbares Wasserstoffatom enthält, mit sich selbst polykondensiert.

Bevorzugte Verfahrensbedingungen zur Synthese von Polyarylenethern sind beispielsweise in den EP-A-113 112 und 135 130 beschrieben. Besonders geeignet ist die Umsetzung der Monomeren in aprotischen Lösungsmitteln, insbesondere N-Methylpyrrolidon, in Gegenwart von wasserfreiem Alkalicarbonat, insbesondere Kaliumcarbonat. Die Monomeren in der Schmelze umzusetzen, hat sich in vielen Fällen ebenso als vorteilhaft erwiesen.

Je nach Synthesebedingungen können die Polyarylenether unterschiedliche Endgruppen aufweisen. Darunter sind solche, die sich gegenüber der Komponente B inert verhalten und solche, die mit funktionellen Gruppen der Copolymeren B, insbesondere den Amino- und Carboxylgruppen reagieren können.

Zu den inerten Endgruppen zählen Halogen-, insbesondere Chlor-, Alkoxy-, vor allem Methoxy- oder Ethoxy-, Aryloxy- bevorzugt Phenoxy oder Benzyloxygruppen. Als Beispiele für reaktive Gruppen sind Hydroxy-, Anhydrid-, Epoxy- oder Carboxylgruppen zu nennen. Die Synthese solcher reaktiver Polyarylenether ist dem Fachmann bekannt.

Gemäß einer Ausführungsform enthalten die erfindungsgemäßen Formmassen Polyarylenether A, die im wesentlichen frei von reaktiven Endgruppen sind. Es können jedoch auch Mischungen verschiedener Polyarylenether mit inerten und reaktiven Endgruppen eingesetzt werden. Der Anteil der Polyarylenether mit reaktiven Endgruppen kann von 2 bis 98 Gew.-%, bezogen auf die Komponente A, betragen.

Komponente B

Als Komponente B enthalten die erfindungsgemäßen Formmassen 1 bis 99 Gew.-%, bevorzugt 5 bis 95 Gew.-% Copolyamide. Besonders bevorzugte erfindungsgemäße Formmassen enthalten 10 bis 90 Gew.-% Copolyamide B.

Erfindungsgemäß sind diese Copolyamide B im wesentlichen aufgebaut aus

$b_1$) 30 bis 44, vorzugsweise 32 bis 40 und insbesondere 32 bis 38 mol-% Einheiten, welche sich von Terephthalsäure ableiten,

$b_2$) 6 bis 20, vorzugsweise 10 bis 18 und insbesondere 12 bis 18 mol-% Einheiten, welche sich von Isophthalsäure ableiten,

$b_3$) 43 bis 49,5, vorzugsweise 46 bis 48,5 und insbesondere 46,3 bis 48,2 mol-% Einheiten, welche sich von Hexamethylendiamin ableiten,

$b_4$) 0,5 bis 7, vorzugsweise 1,5 bis 4 und insbesondere 1,8 bis 3,7 mol-% Einheiten, welche sich von aliphatischen cyclischen Diaminen mit 6 bis 30, vorzugsweise 13 bis 29 und insbesondere 13 bis 17 C-Atomen ableiten,

$b_5$) 0 bis 4 mol-% weiteren von $b_1$) bis $b_4$) verschiedenen polyamidbildenden Monomeren,

wobei die Molprozente der Komponenten $b_1$) bis $b_5$) zusammen 100 % ergeben.

Die Diamineinheiten $b_3$) und $b_4$) werden vorzugsweise etwa äquimolar mit den Dicarbonsäureeinheiten $b_1$) und $b_2$) umgesetzt.

Geeignete Monomere $b_4$) sind vorzugsweise cyclische Diamine der Formel

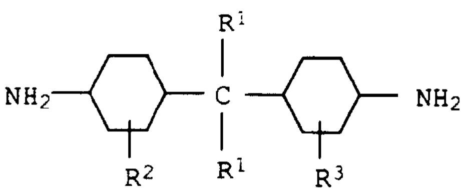

in der

$R^1$ Wasserstoff oder eine $C_1$-$C_4$-Alkylgruppe,
$R^2$ eine $C_1$-$C_4$-Alkylgruppe oder Wasserstoff und
$R^3$ eine $C_1$-$C_4$-Alkylgruppe oder Wasserstoff bedeutet.

Besonders bevorzugte Diamine $b_4$) sind Bis(4-aminocyclohexyl)-methan, Bis(4-amino-3-methylcyclohexyl)methan, Bis(4-aminocyclohexyl)-2,2-propan oder Bis(4-amino-3-methylcyclo-hexyl)-2,2-propan.

Als weitere Monomere $b_4$) seien 1,3-, 1,4-Cyclohexandiamin oder Isophorondiamin genannt.

Neben den vorstehend beschriebenen Einheiten $b_1$) bis $b_4$) können die Copolyamide B bis zu 4, vorzugsweise bis zu 3,5 Gew.-%, bezogen auf die Komponenten $b_1$) bis $b_4$) an weiteren polyamidbildenden Monomeren $b_5$) enthalten.

Aromatische Dicarbonsäuren als $b_5$) weisen im allgemeinen 8 bis 16 Kohlenstoffatome auf. Geeignete aromatische Dicarbonsäuren sind beispielsweise substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphthalindicarbonsäure und Phenoxyterephthalsäure.

Weitere polyamidbildende Monomere $b_5$) können sich z.B. von Dicarbonsäuren mit 4 bis 16 Kohlenstoffatomen und aliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin oder Piperazin, als Vertreter der Diamine und Caprolactam, Capryllactam, Önanthlactam, Laurinlactam und ω-Aminoundecansäure als Vertreter von Lactamen bzw. Aminocarbonsäuren genannt.

Die Schmelzpunkte der Copolyamide B liegen in der Regel im Bereich von 290 bis 340°C, bevorzugt von 292 bis 330°C, wobei dieser Schmelzpunkt mit einer hohen Glasübergangstemperatur von in der Regel mehr als 120°C, insbesondere mehr als 130°C (im trockenen Zustand) verbunden ist.

Bei den Copolyamiden B werden erfindungsgemäß solche bevorzugt verwendet werden, die einen Kristallinitätsgrad > 30 %, bevorzugt > 35 %, und insbesondere > 40 % aufweisen.

Der Kristallinitätsgrad ist ein Maß für den Anteil an kristallinen Fragmenten im Copolyamid und wird durch Röntgenbeugung oder indirekt durch Messung von $\Delta H_{krist.}$ bestimmt.

Selbstverständlich können auch Mischungen der Copolyamide B eingesetzt werden, wobei das Mischungsverhältnis beliebig ist.

Geeignete Verfahren zur Herstellung der Copolyamide sind dem Fachmann bekannt.

Als eine bevorzugte Herstellweise sei der Batch-Prozeß (diskontinuierliche Herstellweise) genannt. Dabei wird die wäßrige Monomerenlösung innerhalb 0,5 bis 3 h in einem Autoklaven auf Temperaturen von 280 - 340°C erhitzt, wobei ein Druck von 10 - 50, insbesondere 15 - 40 bar erreicht wird, der durch Entspannen von überschüssigem Wasserdampf möglichst konstant bis zu 2 h gehalten wird. Anschließend entspannt man den Autoklaven bei konstanter Temperatur innerhalb eines Zeitraumes von 0,5 - 2 h, bis man einen Enddruck von 1 bis 5 bar erreicht hat. Anschließend wird die Polymerschmelze ausgetragen, abgekühlt und granuliert.

Ein anderes bevorzugtes Verfahren erfolgt in Anlehnung an die in den EP-A 129 195 und 129 196 beschriebenen Verfahren.

Gemäß diesen Verfahren wird eine wäßrige Lösung der Monomeren $b_1$) bis $b_4$) sowie gegebenenfalls $b_5$) mit einem Monomerengehalt von 30 bis 70, vorzugsweise 40 bis 65 Gew.-% unter erhöhtem Druck (1 bis 10 bar) und unter gleichzeitiger Verdampfung von Wasser und Bildung eines Präpolymeren innerhalb von weniger als 60 s auf eine Temperatur von 280 bis 330°C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 280 bis 330°C bei einer Verweilzeit von 5 - 30 min polykondensiert. Es versteht sich von selbst, daß die Temperatur im Reaktor über dem bei dem jeweiligen Wasserdampf-Druck erforderlichen Schmelzpunkt des entstehenden Präpolymeren liegt.

Durch diese kurzen Verweilzeiten wird die Bildung von Triaminen weitgehend verhindert.

Das so erhaltene Polyamid-Präpolymere, das in der Regel eine Viskositätszahl von 40 bis 70 ml/g, bevorzugt von 40 bis 60 ml/g, gemessen an einer 0,5 gew.-%igen Lösung in 96 %iger Schwefelsäure bei 25°C, aufweist, wird kontinuierlich aus der Kondensationszone entnommen.

Nach einer bevorzugten Arbeitsweise leitet man das so erhaltene Polyamid-Präpolymere schmelzflüssig durch eine Austragszone unter gleichzeitiger Entfernung des in der Schmelze enthaltenen Restwassers. Geeignete Austragszonen sind beispielsweise Entgasungs-extruder. Die so vom Wasser befreite Schmelze wird dann in Stränge gegossen und granuliert.

Dieses Granulat wird in fester Phase unter Inertgas kontinuierlich oder diskontinuierlich bei einer Temperatur unterhalb des Schmelzpunktes, z.B. von 170 bis 240°C, bis zur gewünschten viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas Stickstoff oder insbesondere überhitzter Wasserdampf, vorteilhaft der am Kopf der Kolonne anfallende Wasserdampf, verwendet wird.

Die Viskositätszahl, gemessen an einer 0,5 gew.-%igen Lösung in 96 %iger Schwefelsäure bei 25°C, liegt nach der Nachkondensation in fester Phase oder den anderen vorstehend genannten Herstellverfahren im allgemeinen im Bereich von 100 bis 500 ml/g, vorzugsweise von 110 bis 200 ml/g.

Komponente C

Neben den Komponenten A und B können die erfindungsgemäßen Formmassen noch Verstärkungsmittel oder Füllstoffe enthalten. Als Komponente C können die erfindungsgemäßen Formmassen z.B. bis zu 60, bevorzugt von 0 bis 45, vorzugsweise 10 bis 40 Gew.-% faseroder teilchenförmige Füllstoffe oder Verstärkungsstoffe oder deren Mischungen enthalten.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,04 bis 0,5 mm.

Kohlenstoff- oder Glasfasern können auch in Form von Geweben, Matten oder Glasseidenrovings eingesetzt werden.

Als teilchenförmige Füllstoffe eignen sich vor allem amorphe Kieselsäure, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin).

Bevorzugte Kombinationen von Füllstoffen sind z.B. 5 bis 30 Gew.-% Wollastonit oder Talkum mit 1 bis 10 Gew.-% Glasfasern.

Komponente D

Als Komponente D können die erfindungsgemäßen Formmassen auch bis 40 Gew.-%, bevorzugt von 0 bis 25, insbesondere von 3 bis 20 Gew.-% schlagzähmodifizierende Kautschuke D enthalten.
Bevorzugte schlagzähmodifizierende Kautschuke D sind Polymerisate auf der Basis von

$d_1$) 40 bis 100 Gew.-% mindestens eines $\alpha$-Olefins mit 2 bis 8 C-Atomen

$d_2$) 0 bis 50 Gew.-% eines Diens

$d_3$) 0 bis 45 Gew.-% eines $C_1$-$C_{12}$-Alkylesters der Acrylsäure oder Methacrylsäure oder Mischungen derartiger Ester,

$d_4$) 0 bis 40 Gew.-% einer ethylenisch ungesättigen Mono- oder Dicarbonsäure oder einem funktionellen Derivat einer solchen Säure

$d_5$) 0 bis 40 Gew.-% eines Epoxygruppen enthaltenden Monomeren,

$d_6$) 0 bis 5 Gew.-% sonstigen radikalisch polymerisierbaren Monomeren, mit der Maßgabe, daß die Komponente (D) kein Olefin-homopolymerisat ist.

Als erste bevorzugte Gruppe der schlagzähmodifizierenden Kautschuke D sind die sogenannten Ethylen-Propylen-(EPM)- bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.
Die Mooney-Viskositäten (MLI+4/100°C) solcher, vorzugsweise unvernetzter, EPM- bzw. EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100°C nach DIN 53 523).
EPM-Kautschuke haben im allgemeinen praktisch keine Doppelbindungen mehr, während EPDM-Kautschuke 1 bis 20 Doppelbindungen/ 100 C-Atome aufweisen können.
Als Dien-Monomere $d_2$) für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tri-cyclo(5.2.1.0.2.6)-3,8-decadien oder deren Mischungen genannt. Bevorzugt werden Hexa-1,5-dien, 5-Ethyliden-norbornen und Dicyclopentadien. Der Diengehalt der EPDM-Kautschuke beträgt vorzugsweise 0,5 bis 50, insbesondere 2 bis 20 und besonders bevorzugt 3 bis 15 Gew.-%, bezogen auf das Gesamtgewicht des Olefinpolymerisats.
EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.
Eine weitere Gruppe bevorzugter schlagzähmodifizierender Kautschuke D sind Copolymere von $\alpha$-Olefinen mit 2-8 C-Atomen, insbesondere des Ethylens, mit $C_1$-$C_{18}$-Alkylestern der Acrylsäure und/ oder Methacrylsäure.
Grundsätzlich eignen sich alle primären und sekundären $C_1$-$C_{18}$-Alkylester der Acrylsäure oder Methacrylsäure, doch werden Ester mit 1-12 C-Atomen, insbesondere mit 2-10 C-Atomen bevorzugt.
Beispiele hierfür sind Methyl-, Ethyl-, Propyl-, n-, i-Butyl- und 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.
Der Anteil der Methacrylsäureester und Acrylsäureester $d_3$) an den schlagzähmodifizierenden Kautschuken D beträgt 0-60, vorzugsweise 10-50 und insbesondere 30-45 Gew.-%.
Anstelle der Ester $d_3$) oder zusätzlich zu diesen können in den schlagzähmodifizierenden Kautschuken D auch säurefunktionelle und/oder latent säurefunktionelle Monomere ethylenisch ungesättigter Mono- oder Dicarbonsäuren $d_4$) oder Epoxygruppen aufweisende Monomere $d_5$) enthalten sein.
Als Beispiele für Monomere $d_4$) seien Acrylsäure, Methacrylsäure, tertiäre Alkylester dieser Säuren, insbesondere tert.-Butyl-acrylat und Dicarbonsäuren wie Maleinsäure und Fumarsäure oder Derivate dieser Säuren sowie deren Monoester genannt.
Als latent säurefunktionelle Monomere sollen solche Verbindungen verstanden werden, die unter den Polymerisationsbedingungen bzw. bei der Einarbeitung der Komponente D in die Formmassen freie Säuregruppen bilden. Als Beispiele hierfür seien Anhydride von Dicarbonsäuren mit bis zu 20 C-Atomen, insbesondere Maleinsäureanhydrid

und tertiäre $C_1$-$C_{12}$-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln II-V zum Monomerengemisch in die schlagzähmodifizierenden Kautschuke D eingebaut

$$R^1C(COOR^2)=C(COOR^3)R^4 \qquad (II)$$

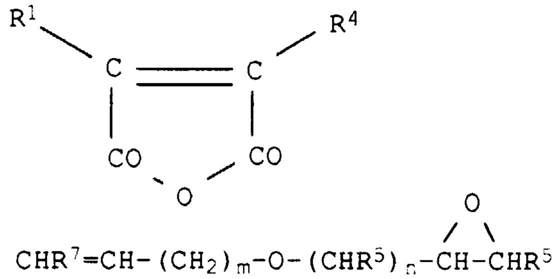

(III)

(IV)

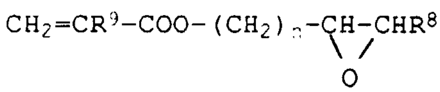

(V)

wobei die Reste $R^1$ - $R^9$ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für $R^1$ - $R^7$ ist Wasserstoff, für m der Wert 0 oder 1 und für n der Wert 1. Die entsprechenden Verbindungen sind Maleinsäure, Fumarsäure, Maleinsäureanhydrid, $d_4$) bzw. Alkenyl-glycidylether oder Vinylglycidylether $d_5$).

Bevorzugte Verbindungen der Formeln II, III, IV und V sind Maleinsäure und Maleinsäureanhydrid als Komponente $d_4$) und Epoxygruppen-enthaltende Ester der Acrylsäure und/oder Methacrylsäure, wobei Glycidylacrylat und Glycidylmethacrylat (als Komponente $d_5$) besonders bevorzugt werden.

Der Anteil der Komponenten $d_4$) bzw. $d_5$) beträgt jeweils 0,07 bis 40 Gew.-%, insbesondere 0,1 bis 20 und besonders bevorzugt 0,15 bis 15 Gew.-%, bezogen auf das Gesamtgewicht der schlagzähmodifizierenden Kautschuke D.

Besonders bevorzugt sind schlagzähmodifizierende Kautschuke D aus

| | |
|---|---|
| 50 bis 98,9 | insbesondere 60 bis 95 Gew.% Ethylen, |
| 0,1 bis 20, | insbesondere 0,15 bis 15 Gew.% Glycidylacrylat und/oder Glycidylmethacrylat, Acrylsäure und/oder Maleinsäureanhydrid, |
| 1 bis 45, | insbesondere 10 bis 35 Gew.% n-Butylacrylat und/oder 2-Ethylhexylacrylat. |

Weitere bevorzugte Ester der Acryl- und/oder Methacrylsäure sind die Methyl-, Ethyl-, Propyl- und i-Butylester.

Als sonstige Monomere $d_6$) kommen z.B. Vinylester und Vinylether in Betracht.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190°C und 2,16 kg Belastung).

Als weitere Gruppe von geeigneten schlagzähmodifizierenden Kautschuken D sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich

im allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt 5 werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril 5 und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl (meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

5 Derartige Kautschuke sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)ether-glycolen und kurzkettige Segmente, die sich von niedermolekularen Diolen und Dicarbonsäuren ableiten, enthalten. Derartige Produkte sind an sich bekannt und in der Literatur, z.B. in der 5 US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Komponente E

Die erfindungsgemäßen Formmassen können als Komponente E Zusatzstoffe und Verarbeitungshilfsmittel oder deren Mischungen enthalten.

Deren Anteil beträgt im allgemeinen bis zu 40, vorzugsweise von 0 bis zu 15 Gew.%, bezogen auf das Gesamtgewicht der Komponenten (A) bis (E).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Pigmente und Farbstoffe sind allgemein in Mengen bis zu 6, bevorzugt 0,5 bis 5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 $PbCO_3 \cdot Pb(OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungs-gemäßen Formmassen verwendet.

Schwarze Farbpigmente, die erfindungsgemäß eingesetzt werden können, sind Eisenoxidschwarz ($Fe_3O_4$), Spinellschwarz ($Cu(Cr,Fe)_2O_4$), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Die Halogenide, insbesondere des Kupfers, können auch noch elektronenreiche π-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert.

Die erfindungsgemäßen Formmassen zeichnen sich durch hohe Wärmeformbeständigkeit, gute Fließfähigkeit, hohe Steifigkeit bei Temperaturen oberhalb von 100°C sowie durch verbesserte Verarbeitungsstabilität aus. Sie eignen sich zur Herstellung von Formkörpern, Folien oder Fasern, besonders für den Elektro- oder Elektronikbereich, aber auch auf dem Gebiet des Fahrzeug- oder Apparatebaus.

Beispiele

Komponente $A_1$

Als Komponente $A_1$ wurde ein Polyarylenether, enthaltend wiederkehrende Einheiten der Formel

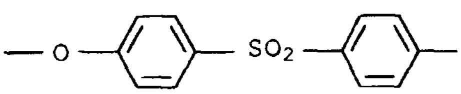

($I_1$)

charakterisiert durch eine Viskositätszahl von 56 ml/g (gemessen an 1 gew.-%iger Lösung einer Mischung aus Phenol und 1,2-Dichlorbenzol im Verhältnis 1:1, z.B. Ultrason® E 2010 der Firma BASF) verwendet.

Herstellung der Komponenten B

Komponente $B_1$ und $B_3$ (erfindungsgemäß)

Eine 60 %ige wäßrige Lösung, bestehend aus Terephthalsäure, Isophthalsäure, Hexamethylendiamin bzw. Bis(4-amino-3-methyl-cyclohexyl)methan oder Bis(4-aminocyclohexyl)methan wurde in den in der Tabelle angegebenen Mengenverhältnissen aus einem beheizten Vorratsbehälter bei ca. 80°C mit einer Geschwindigkeit entsprechend einer Polyamidmenge von 5 kg/Stunde mittels einer Dosierpumpe in einen teilweise horizontal, teilweise vertikal angeordneten Röhrenverdampfer befördert. Der Verdampfer war mit einem flüssigen Wärmeträger, der eine Temperatur von 326°C hatte, bei kräftiger Umwälzung beheizt. Der Verdampfer hatte eine Länge von 3 m und einen Inhalt von 180 ml und eine wärmeübertragende Oberfläche von etwa 1300 $cm^2$. Die Verweilzeit im Verdampfer betrug 50 s. Das aus dem Verdampfer austretende Gemisch aus Präpolymeren und Wasserdampf hatte eine Temperatur von 310°C und wurde in einem Abscheider in Wasserdampf und Schmelze getrennt. Die Schmelze verweilte im Abscheider noch 10 Minuten und wurde dann mittels einer Austragsschnecke mit Ausdampfzone in Form von Strängen ausgetragen, in einem Wasserbad verfestigt und anschließend granuliert. Der Abscheider und die Verdampferzone wurden mittels einer Druckhalteeinrichtung, die nach der Kolonne angeordnet war, unter einem Druck von 5 bar gehalten. Der im Abscheider abgetrennte Wasserdampf wurde in eine Füllkörperkolonne mit ca. 10 theoretischen Böden geführt, in die am Kopf ca. 1 1 Brüdenkondensat pro Stunde zur Erzeugung von Rücklauf aufgegeben wurden. Am Kolonnenkopf stellte sich eine Temperatur von 152°C ein. Der nach dem Entspannungsventil austretende Wasserdampf wurde kondensiert und hatte einen Gehalt an Hexamethylendiamin von weniger als 0,05 Gew.-%. Als Kolonnensumpf erhielt

man eine wäßrige Lösung von Hexamethylendiamin, die 80 Gew.-% Hexamethylendiamin, jeweils bezogen auf erzeugtes Polyamid enthielt. Diese Lösung wurde über eine Pumpe wieder vor dem Eintritt in den Verdampfer der Ausgangssalzlösung zugegeben.

Nach Austritt der Polymerschmelze aus dem Abscheider hatte das Polyamid eine sehr helle Eigenfarbe und eine Viskositätszahl von 48 ml/g (gemessen als 0,5 gew.-%ige Lösung bei 25°C in 96 gew.-%iger $H_2SO_4$ gemäß DIN 53 246).

Das Produkt wies in etwa eine Äquivalenz von Carboxyl- und Aminoendgruppen auf.

Im Austragsextruder wurde die Schmelze dann auf Normaldruck entspannt und bei einer Verweilzeit von weniger als 1 Minute praktisch nicht mehr weiter kondensiert.

Anschließend wurden die Produkte in fester Phase in einem feststehenden Temperrohr (doppelwandiges, von außen mit Öl auf Temper-Temperatur beheiztes Glasrohr von 120 mm Innendurchmesser und 1000 mm Länge, das mit überhitztem Wasserdampf mit 120 l/min durchströmt ist) bei 200°C diskontinuierlich auf eine Viskositätszahl von 112 ml/g getempert. Die Verweilzeit betrug 8 bis 18 h. Im Verlauf dieser Temperung wurde gegebenenfalls auch ein Großteil der extrahierbaren Restmonomere vom Wasserdampf extrahiert.

Komponente $B_2$ (erfindungsgemäß)

In einem 5 1 Laborautoklaven wurden 2 kg einer Monomermischung entsprechend Beispiel 1 mit 700 ml Wasser vorgelegt. Die Mischung war in 5 Glasröhren zu je 800 ml Inhalt verteilt. Der Autoklav wurde 1 h auf 350°C aufgeheizt, wobei der resultierende Wasserdampfdruck nach Erreichen von 20 bar durch Entspannen überschüssigen Wassers konstant gehalten wurde. Danach wurden Temperatur und Druck noch 1 h konstant gehalten. Anschließend wurde auf 330°C abgekühlt und der Autoklav auf Normaldruck entspannt. Die Heizung des Autoklaven wurde abgeschaltet, wobei nach ca. 3 h Raumtemperatur erreicht war.

Die Glasröhren wurden aus dem Autoklaven entnommen und deren Inhalt grob gemahlen. Das erhaltene Produkt wurde in fester Phase bei 198°C unter Stickstoff 10 h auf eine Viskositätszahl von 115 ml/g nachkondensiert.

Komponenten $B_{1v}$ bis $B_{3v}$ (zum Vergleich)

In einem 10 l Laborautoklaven wurden 3 kg einer Monomermischung, die die in der Tabelle aufgeführten Polymere ergaben, mit 2500 ml Wasser vorgelegt. Die Herstellung und Aufarbeitung erfolgte gemäß Beispiel 2. Die Copolyamide wiesen nach der Nachkondensation in fester Phase unter Stickstoff bei 196°C (10 h) eine VZ von 114 ml/g auf.

Komponente $B_{4v}$ (zum Vergleich)

Teilaromatisches Copolyamid, erhalten durch Umsetzen der folgenden Monomeren
34,09 mol-% Terephthalsäure
34,09 mol-% Hexamethylendiamin
31,82 mol-% ε-Caprolactam,
charakterisiert durch eine relative Viskosität von 2,4 (gemessen an 1 gew.-%iger Lösung in 96 gew.-%iger Schwefelsäure bei 25°C).

Die Zusammensetzungen und Eigenschaften der Komponenten B sind in Tabelle 1 wiedergegeben. Als relatives Maß für den Kristallinitätsgrad wurde die spezifische Schmelzwärme

$$\Delta H_{krist}$$

mittels Differential-Thermogravimetrie DSC 9900 der Firma Du Pont bei einer Aufheizrate von 20°C/min bestimmt.

Tabelle 1: Zusammensetzung und Eigenschaften der Copolyamide

| Monomere | Menge in: | erfindungsgemäß | | | zum Vergleich | | | |
| --- | --- | --- | --- | --- | --- | --- | --- | --- |
| | | $B_1$ | $B_2$ | $B_3$ | $B_{1v}$ | $B_{2v}$ | $B_{3v}$ | $B_{4v}$ |
| Terephtalsäure | mol-% | 32,2 | 32,2 | 40,3 | 29,5 | 32,2 | 32,2 | 34,09 |
| | Gew.-% | 37,5 | 37,5 | 42,2 | 34,0 | 37,8 | 35,9 | |
| Isophthalsäure | mol-% | 17,8 | 17,8 | 18,6 | 29,5 | 17,8 | 17,8 | - |
| | Gew.-% | 20,6 | 20,6 | 18,6 | 23,6 | 20,9 | 20,9 | - |
| Hexamethylendiamin | mol-% | 48,1 | 48,1 | 48,0 | 46,2 | 49,7 | 42,7 | 34,09 |
| | Gew.-% | 39,1 | 39,1 | 35,0 | 36,9 | 40,8 | 33,3 | |
| 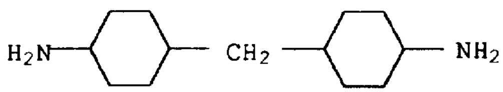 | mol-% | 1,9 | 1,9 | - | 3,8 | 0,3 | 7,3 | - |
| | Gew.-% | 2,8 | 2,8 | - | 5,5 | 0,45 | 10,9 | - |
| 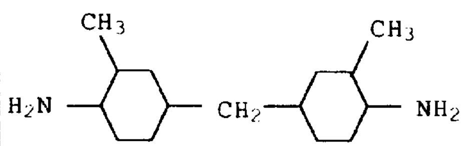 | mol-% | - | - | 2 | - | - | - | - |
| | Gew.-% | - | - | 3 | - | - | - | - |
| ε-Caprolactam | mol-% | - | - | - | - | - | - | 31,82 |
| Eigenschaften: $\Delta H_{krist}$ [J/g] | | 54 | 52 | 51 | 32 | 36 | 31 | |

Komponente C

Es wurden Glasfaserrovings einer Dicke von 10 µm eingesetzt.

Komponente D

Verwendet wurde ein Ethylen-Propylen-Kautschuk, der mit 0,7 Gew.-% Maleinsäure und/oder Maleinsäureanhydrid gepropft war; gekennzeichnet durch einen Schmelzindex von 3 g/10 min (gemessen bei 230°C und einer Belastung von 2,16 kg).

Die Komponenten wurden in einem Zweiwellenextruder bei einer Massetemperatur von 320 bis 380°C gemischt. Die Schmelze wurde durch ein Wasserbad geleitet und anschließend granuliert.

Das getrocknete Granulat wurde bei 320 bis 360°C zu Normkleinstäben und Schulterstäben verarbeitet.

Die Wärmeformbeständigkeit der Proben wurde mittels der Vicat-Er-weichungstemperaturen beurteilt. Die Vicat-Erweichungstemperaturen wurden nach DIN 53 460 mit einer Kraft von 49,05N bei einer Temperatursteigerung von 50K pro Stunde an Normkleinstäben ermittelt.

Die Fließfähigkeit der Formmassen wurde anhand des Schmelz-volumenindices (MVI) nach DIN 53 735 bei einer Temperatur von 320°C und einer Belastung von 21,6 kg bestimmt.

Als Maß für die Verarbeitungsstabilität wurde der absolute Betrag der Differenz der MVI-Werte, gemessen nach 5 und 15 Minuten Standzeit bei 340°C, bezogen auf den MVI-Wert gemessen nach 5 Minuten gewählt.

Die Angabe des E-Moduls und der Zugfestigkeit gibt die Steifigkeit und Festigkeit der Formmassen, bestimmt durch Zugversuche nach DIN 53 455 an Schulterstäben bei 110°C, wieder.

Die Zusammensetzung der Formmassen und die Ergebnisse der anwendungstechnischen Prüfungen sind den Tabellen 2 und 3 zu entnehmen.

Tabelle 2 :

| Glasfaserverstärkte Formmassen | | | | | | | | | |
|---|---|---|---|---|---|---|---|---|---|
| | erfindungsgemäß | | | | zum Vergleich | | | | |
| Formmasse Nr.: | 1 | 2 | 3 | 4 | V1 | V2 | V3 | V4 | V5 |
| Komponente | Zusammensetzung [Gew.-%] | | | | | | | | |
| A | 42 | 49 | 49 | 49 | 49 | 49 | 49 | 49 | 70 |
| $B_1$ | 28 | 21 | | | | | | | |
| $B_2$ | | | 21 | | | | | | |
| $B_3$ | | | | 21 | | | | | |
| $B_{1V}$ | | | | | 21 | | | | |
| $B_{2V}$ | | | | | | 21 | | | |
| $B_{3V}$ | | | | | | | 21 | | |
| $B_{4V}$ | | | | | | | | 21 | |
| C | 30 | 30 | 30 | 30 | 30 | 30 | 30 | 30 | 30 |
| | | | | | | | | | |
| Eigenschaften | | | | | | | | | |
| Vicat B [°C] | 206 | 207 | 207 | 208 | 206 | 205 | 205 | 205 | 219 |
| MVI[1)] [ml/10'] | 138 | 132 | 129 | 126 | 118 | 137 | 132 | 142 | 27 |
| E-Modul bei 110°C [N/$mm^2$] | 9400 | 9300 | 9200 | 9250 | 8650 | 8850 | 8700 | 7400 | 8600 |
| Δ MVI[2)] [%] | 5 | 4 | 3 | 4 | 9 | 8 | 7 | 25 | 0 |

1) Gemessen bei 320°C und 21,6 kg Belastung

2) $\Delta$ MVI = ($MVI_{5'}$ - $MVI_{15'}$/$MVI_{5'}$) x 100, Messung bei 340°C, 10 kg

Tabelle 3 :

| Schlagzähmodifizierte Formmassen | | | | | | | |
|---|---|---|---|---|---|---|---|
| | erfindungsgemäß | | | | zum Vergleich | | |
| Formmasse Nr.: | 5 | 6 | 7 | 8 | V6 | V7 | V8 |
| Komponente | Zusammensetzung [Gew.-%] | | | | | | |
| A | 90 | 80 | 70 | 60 | 70 | 70 | 100 |
| $B_1$ | 8,5 | 17 | 25,5 | 34 | | | |
| $B_{3V}$ | | | | | 25,5 | | |
| $B_{4V}$ | | | | | | 25,5 | |
| D | 1,5 | 3 | 4,5 | 6 | 4,5 | 4,5 | |
| | | | | | | | |
| Vicat B [°C] | 211 | 208 | 206 | 204 | 205 | 204 | 217 |
| MVI[1)] [ml/10'] | 86 | 116 | 153 | 186 | 152 | 160 | 46 |
| E-Modul bei 110°C [$N/mm^2$] | 2400 | 2350 | 2250 | 2180 | 2150 | 1700 | 2500 |
| $\Delta$ MVI[2)] [%] | 2 | 3 | 3 | 4 | 7 | 29 | 0 |

[1)] Gemessen bei 320°C und einer Belastung von 21,6 kg

[2)] $\Delta$ MVI = ($MVI_{5'}$ - $MVI_{15'}$/$MVI_{5'}$) x 100; Messung bei 340°C und 21,6 kg

## Patentansprüche

**1.** Formmassen, enthaltend

A) 1 bis 99 Gew.-% Polyarylenether mit wiederkehrenden Einheiten I

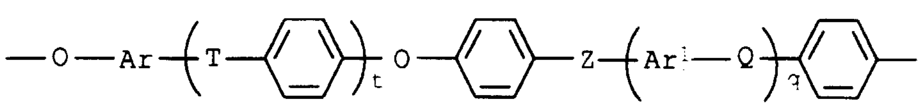 (I),

in denen t und q jeweils eine ganze Zahl 0, 1, 2 oder 3 bedeuten können,

T, Q und Z jeweils eine chemische Bindung oder eine Gruppe -O-, -S-, $-SO_2-$, S=O, C=O, -N=N-, $R^aC=CR^b-$ oder $-CR^cR^d-$ sein können, mit der Maßgabe, daß mindestens eine der Gruppen T, Q oder Z $-SO_2-$ oder C=O bedeutet,

$R^a$ und $R^d$ jeweils ein Wasserstoffatom oder eine $C_1$- bis $C_{10}$-Alkylgruppe bedeuten,

$R^c$ und $R^d$ jeweils ein Wasserstoffatom, eine $C_1$- bis $C_{10}$-Alkyl-, $C_5$- bis $C_{10}$-Cycloalkyl, $C_1$- bis $C_{10}$-Alkoxy- oder $C_6$- bis $C_{18}$-Arylgruppe, wobei die vorgenannten Gruppen jeweils mit Fluor- und/oder Chloratomen substituiert sein können, bedeuten,

Ar und $Ar^1$ für $C_6$- bis $C_{18}$-Arylgruppen stehen, wobei diese Substituenten haben können, ausgewählt aus $C_1$- bis $C_{10}$-Alkyl, $C_6$- bis $C_{18}$-Aryl, $C_1$ bis $C_{10}$-Alkoxy und Halogen,

B) 1 bis 99 Gew.-% Copolyamide, im wesentlichen aufgebaut aus

$b_1$) 30 bis 44 mol-% Einheiten, welche sich von Terephthalsäure ableiten

$b_2$) 6 bis 20 mol-% Einheiten, welche sich von Isophthalsäure ableiten

$b_3$) 43 bis 49,5 mol-% Einheiten, welche sich von Hexamethylendiamin ableiten

$b_4$) 0,5 bis 7 mol-% Einheiten, welche sich von aliphatischen cyclischen Diaminen mit 6 bis 30 C-Atomen ableiten

$b_5$) 0 bis 4 mol-% weitere, von $b_1$) bis $b_4$) verschiedene, polyamidbildende Monomere

wobei die Molprozente der Komponenten $b_1$) bis $b_5$) zusammen 100 % ergeben und
C) 0 bis 60 Gew.-% faser- oder teilchenförmige Füllstoffe oder Verstärkungsmittel
D) 0 bis 40 Gew.-% schlagzähmodifizierende Kautschuke
E) 0 bis 40 Gew.-% Zusatzstoffe, Verarbeitungshilfsmittel oder deren Mischungen

wobei die Gewichtsprozente der Komponenten A) bis E) zusammen 100 % ergeben.

**2.** Formmassen nach Anspruch 1, enthaltend

A) 10 bis 90 Gew.-% Polyarylenether A und
B) 10 bis 90 Gew.-% Copolyamide B.

**3.** Formmassen nach Anspruch 1 oder 2, in denen die Polyarylenether A

$a_1$) 0 bis 100 Mol-% wiederkehrende Einheiten $I_1$

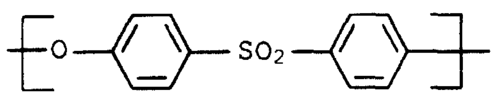

($I_1$)

und
$a_2$) 0 bis 100 Mol-% wiederkehrende Einheiten $I_2$

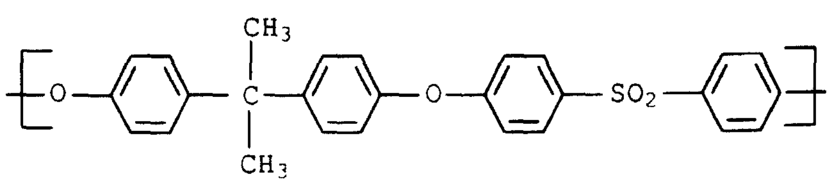

($I_2$)

enthalten.

**4.** Formmassen nach einem der Ansprüche 1 bis 3, in denen die Copolyamide B im wesentlichen aufgebaut sind aus

$b_1$) 32 bis 40 mol-% Einheiten, welche sich von Terephthalsäure ableiten,
$b_2$ 10 bis 18 mol-% Einheiten, welche sich von Isophthalsäure ableiten
$b_3$) 46 bis 48,5 mol-% Einheiten, welche sich von Hexamethylendiamin ableiten und
$b_4$) 1,5 bis 4 mol-% Einheiten, welche sich von aliphatischen cyclischen Diaminen mit 6 bis 30 C-Atomen ableiten.

**5.** Formmassen nach einem der Ansprüche 1 bis 4, in denen die Copolyamide B als Komponente $b_4$ Bis(4-amino-cyclohexyl)methan oder Bis(4-amino-3-methylcyclohexyl)methan oder deren Mischungen enthalten.

**6.** Verwendung der Formmassen gemäß einem der Ansprüche 1 bis 5 zur Herstellung von Fasern, Folien oder Formkörpern.

**7.** Formkörper, Fasern oder Folien, hergestellt unter Verwendung der Formmassen gemäß einem der Ansprüche 1 bis 5.

## Claims

**1.** A molding material containing

A) from 1 to 99% by weight of polyarylene ethers having repeating units I

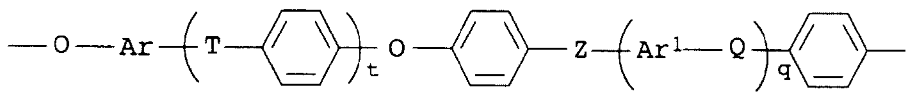

(I),

where t and q may each be an integer 0, 1, 2 or 3,

T, Q and Z may each be a chemical bond or -O-, -S-, $-SO_2-$, S=O, C=O, -N=N-, $R^aC=CR^b-$ or $-CR^cR^d-$, with the proviso that at least one of the groups T, Q and Z is $-SO_2-$or C=O,

$R^a$ and $R^b$ are each hydrogen or $C_1$-$C_{10}$-alkyl,

$R^c$ and $R^d$ are each hydrogen, $C_1$-$C_{10}$-alkyl, $C_5$-$C_{10}$-cycloalkyl, $C_1$-$C_{10}$-alkoxy or $C_6$-$C_{18}$-aryl, where the abovementioned groups may each be substituted by fluorine and/or chlorine,

Ar and $Ar^1$ are each $C_6$-$C_{18}$-aryl, which may have substituents selected from the group consisting of $C_1$-$C_{10}$-alkyl, $C_6$-$C_{18}$-aryl, $C_1$-$C_{10}$-alkoxy and halogen,

from 1 to 99% by weight of copolyamides essentially composed of

$b_1$) from 30 to 44 mol% of units which are derived from terephthalic acid,

$b_2$) from 6 to 20 mol% of units which are derived from isophthalic acid,

$b_3$) from 43 to 49.5 mol% of units which are derived from hexamethylenediamine,

$b_4$) from 0.5 to 7 mol% of units which are derived from aliphatic cyclic diamines of 6 to 30 carbon atoms and

$b_5$) from 0 to 4 mol% of further polyamide-forming monomers which differ from $b_1$) to b4),

the molar percentages of components $b_1$) to $b_5$) together giving 100%, and

C) from 0 to 60% by weight of fibrous or particulate fillers or reinforcing agents,

D) from 0 to 40% by weight of rubber impact modifiers and

E) from 0 to 40% by weight of additives, processing assistants or a mixture thereof,

the percentages by weight of components A) to E) together giving 100%.

**2.** A molding material as claimed in claim 1, containing

A) from 10 to 90% by weight of polyarylene ethers A and
B) from 10 to 90% by weight of copolyamides B.

**3.** A molding material as claimed in claim 1 or 2, wherein the polyarylene ethers A contain

$a_1$) from 0 to 100 mol% of repeating units $I_1$

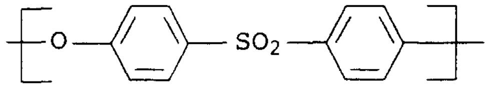 $(I_1)$

and

$a_2$) from 0 to 100 mol% of repeating units $I_2$

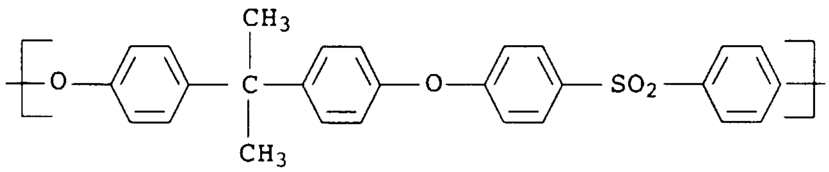 $(I_2)$.

**4.** A molding material as claimed in any of claims 1 to 3, wherein the copolyamides B are essentially composed of

- $b_1$) from 32 to 40 mol% of units which are derived from terephthalic acid,
- $b_2$) from 10 to 18 mol% of units which are derived from isophthalic acid,
- $b_3$) from 46 to 48.5 mol% of units which are derived from hexamethylenediamine and
- $b_4$) from 1.5 to 4 mol% of units which are derived from aliphatic cyclic diamines of 6 to 30 carbon atoms.

**5.** A molding material as claimed in any of claims 1 to 4, wherein the copolyamides B contain, as component $b_4$, his (4-aminocyclohexyl)methane or bis(4-amino-3-methylcyclohexyl)methane or a mixture thereof.

**6.** Use of a molding material as claimed in any of claims 1 to 5 for the production of fibers, films or moldings.

**7.** A molding, fiber or film produced using a molding material as claimed in any of claims 1 to 5.

## Revendications

**1.** Masses de moulage, comportant

A) 1 à 99% en poids d'éther polyarylénique présentant des unités répétitives I :

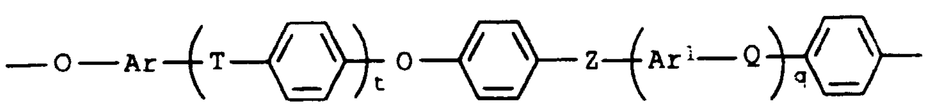 (I)

dans lesquelles t et q peuvent chacun représenter un nombre entier 0, 1, 2 ou 3,

T, Q et Z peuvent être chacun une liaison chimique ou un groupe -O-, -S-, $-SO_2-$, S=O, C=O, -N=N-, $R^aC=CR^b-$ ou $-CR^cR^d-$, à la condition qu'au moins un des groupes T, Q ou Z représente $-SO_2-$ ou C=O,
$R^a$ et $R^b$ représentent chacun un atome d'hydrogène ou un groupe alkyle en $C_1$-$C_{10}$,
$R^c$ et $R^d$ représentent chacun un atome d'hydrogène, un groupe alkyle en $C_1$-$C_{10}$, cycloalkyle en $C_5$-$C_{10}$, alcoxy en $C_1$-$C_{10}$ ou aryle en $C_6$-$C_{18}$, les groupes précités pouvant être chacun substitués par des atomes de fluor et/ou de chlore,
Ar et $Ar^1$ représentent des groupes aryle en $C_6$-$C_{18}$, ceux-ci pouvant porter des substituants choisis parmi les groupes alkyle en $C_1$-$C_{10}$, aryle en $C_6$-$C_{18}$, alcoxy en $C_1$-$C_{10}$ et halogène,

B) 1 à 99% en poids de copolyamides, constitués essentiellement

$b_1$) de 30 à 44 moles % d'unités qui dérivent d'acide téréphtalique,
$b_2$) de 6 à 20 moles % d'unités qui dérivent d'acide isophtalique,
$b_3$) de 43 à 49,5 moles % d'unités, qui dérivent d'hexaméthylènediamine,
$b_4$) de 0,5 à 7 moles % d'unités, qui dérivent de diamines cycliques aliphatiques comportant 6 à 30 atomes de C,
$b_5$) de 0 à 4 moles % d'autres monomères générateurs de polyamide, différents de $b_1$ ) à $b_4$),

les pour-cent molaires des composants $b_1$) à $b_5$) donnant ensemble 100%, et
C) 0 à 60% en poids de matières de remplissage ou agents de renforcement en forme de fibres ou de particules,
D) 0 à 40% en poids de caoutchoucs modifiant la résilience,
E) 0 à 40% en poids d'additifs, d'adjuvants de traitement ou de leurs mélanges,

les pour-cent en poids des composants A) à E) formant ensemble 100%.

**2.** Masses de moulage suivant la revendication 1, contenant

A) 10 à 90% en poids d'éther polyarylénique A et
B) 10 à 90% en poids de copolyamides B.

**3.** Masses de moulage suivant l'une des revendications 1 et 2, dans lesquelles les éthers polyaryléniques A contiennent

$a_1$) 0 à 100 moles % d'unités répétitives $I_1$ :

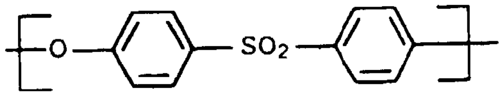

($I_1$)

et
$a_2$) 0 à 100 moles % d'unités répétitives $I_2$ :

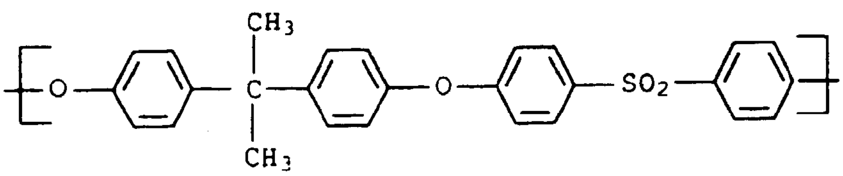

($I_2$)

**4.** Masses de moulage suivant l'une des revendications 1 à 3, dans lesquelles les copolyamides B sont constitués essentiellement

$b_1$) de 32 à 40 moles % d'unités, qui dérivent d'acide téréphtalique,
$b_2$) de 10 à 18 moles %, d'unités qui dérivent d'acide isophtalique,
$b_3$) de 46 à 48,5 moles % d'unités, qui dérivent d'hexaméthylénediamine, et
$b_4$) de1,5 à 4 moles % d'unités, qui dérivent de diamines cycliques aliphatiques comportant 6 à 30 atomes de C.

**5.** Masses de moulage suivant l'une des revendications 1 à 4, dans lesquelles les copolyamides B contiennent, comme composant $b_4$, du bis(4-aminocyclohexyl)méthane ou du bis(4-amino-3-méthylcyclohexyl)méthane ou leurs mélanges.

**6.** Utilisation des masses de moulage suivant l'une des revendications 1 à 5, pour la préparation de fibres, de feuilles ou de corps façonnés.

**7.** Corps façonnés, fibres ou feuilles, préparés par l'utilisation des masses de moulage suivant l'une des revendications 1 à 5.